(19) Europäisches Patentamt
European Patent Office
Office européen des brevets

(11) **EP 3 008 430 B1**

(12) # EUROPÄISCHE PATENTSCHRIFT

(45) Veröffentlichungstag und Bekanntmachung des Hinweises auf die Patenterteilung:
**13.11.2019 Patentblatt 2019/46**

(51) Int Cl.:
**G01F 23/284** *(2006.01)* **G01F 23/00** *(2006.01)*
**G01N 22/04** *(2006.01)*

(21) Anmeldenummer: **14728530.8**

(22) Anmeldetag: **03.06.2014**

(86) Internationale Anmeldenummer:
**PCT/EP2014/061431**

(87) Internationale Veröffentlichungsnummer:
**WO 2014/198582 (18.12.2014 Gazette 2014/51)**

(54) **FÜLLSTANDMESSGERÄT ZUR FEUCHTIGKEITSBESTIMMUNG**

FILL LEVEL GAUGE FOR MOISTURE DETERMINATION

APPAREIL DE MESURE DE NIVEAU DE REMPLISSAGE POUR DÉTERMINATION DU TAUX D'HUMIDITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2013 DE 202013102514 U**

(43) Veröffentlichungstag der Anmeldung:
**20.04.2016 Patentblatt 2016/16**

(73) Patentinhaber: **VEGA Grieshaber KG**
**77709 Wolfach (DE)**

(72) Erfinder:
• **GRIESSBAUM, Karl**
**77796 Mühlenbach (DE)**

• **FEHRENBACH, Josef**
**77716 Haslach (DE)**
• **WELLE, Roland**
**77756 Hausach (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
**EP-A1- 1 308 725     EP-A1- 1 321 565**
**EP-A1- 2 527 802     WO-A1-90/07110**
**WO-A1-03/001160     WO-A1-03/016835**
**US-B1- 7 525 476**

## Beschreibung

Gebiet der Erfindung

Die Erfindung betrifft die Füllstandmessung. Insbesondere betrifft die Erfindung ein Füllstandmessgerät zur Bestimmung eines Füllstands eines Füllmediums, ein Programmelement und ein computerlesbares Medium.

Technischer Hintergrund

Bislang existiert am Markt eine Vielzahl von Sensoren zur Erfassung des Füllstands in einem Behälter oder auf einer Halde. Von besonderer Bedeutung sind Sensoren, welche den Füllstand mit geführten oder freistrahlenden Radarwellen erfassen.

Diese Füllstandmessgeräte können nach dem Puls-Laufzeitverfahren arbeiten. In diesem Falle werden elektromagnetische Pulse in Richtung Füllgutoberfläche gesendet. Das Füllstandmessgerät empfängt dann die an der Füllgutoberfläche und ggf. an weiteren Reflektoren reflektierten Signalbestandteile dieses Messsignals und erzeugt daraus eine Echokurve, welche zur Füllstandbestimmung ausgewertet werden kann.

Auch sind Füllstandmessgeräte bekannt, die nach dem FMCW-Prinzip (FMCW: Frequency Modulated Continuous Wave) arbeiten. Auch diese können geführte oder freistrahlende Signale verwenden.

Darüber hinaus existiert insbesondere bei Anwendern aus dem Bereich der Getreideverarbeitung, aber auch bei Anwendern aus dem Bereich Kies/Beton ein Bedarf an Messgeräten zur kontinuierlichen Erfassung der Feuchtigkeit (Feuchte) des im Behälter oder auf der Halde gelagerten Materials.

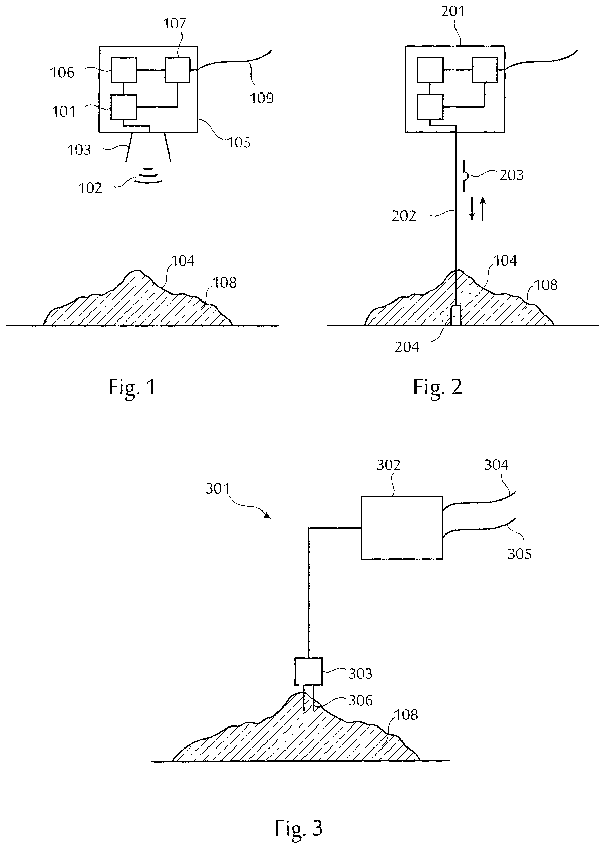

Soll die Feuchtigkeit des in einem Behälter oder auf einer Halde gelagerten Materials (Füllmedium) gemessen werden, so wird hierfür ein Feuchtigkeitsmessgerät eingesetzt, wie es beispielsweise in Fig. 3 gezeigt ist.

Das Feuchtigkeitsmessgerät ermittelt die Laufzeit eines Messsignals entlang einer Messsonde, die sich im Füllmedium befindet, durch direkte Zeitmessverfahren. Aufgrund der verhältnismäßig kurzen Zeiträume, die das Messsignal entlang der Messsonde durch das Füllgut läuft, kann es zu Messungenauigkeiten kommen. Eine Verbesserung der Messgenauigkeit kann durch Mittelung einer Vielzahl von Messungen erreicht werden, wodurch jedoch der Energiebedarf des Feuchtigkeitsmessgeräts stark erhöht wird. Für ein Zweileitergerät ist dieser Energiebedarf dann zu hoch.

Die EP 1 321 565 zeigt eine Wäschepflegeeinrichtung mit einem Sensor zur Erkennung des Feuchtegehaltes der Wäsche vorgeschlagen, welcher auf dem Transmissions- und/oder Reflexionsprinzips von Mikrowellen basiert. Dazu wird ein Mikrowellensignal In das Innere der Wäschetrommel eingekoppelt und ggf. nach Reflexion gemessen und vorzugsweise mit dem gesendeten Signal verglichen. Anhand des Phasen-, Amplituden- und Laufzeitunterschiede zwischen gesendetem und empfangenem Signal werden der Feuchtegehalt der Wäsche und ggf. zusätzlich der Befüllungsgrad der Wäsche In der Wäschetrommel ermittelt.

Die WO 03/016835 zeigt ein Verfahren zur Bestimmung des Füllstands eines Füllguts in einem Behälter mittels eines nach dem Laufzeitprinzip arbeitenden Füllstandsmeßgeräts. Aus Störsignalen werden durch Berechnung weitere Informationen zum Füllgut (z. B. Dielektrizitätskonstante, Leitfähigkeit, Feuchtegehalt, Temperatur) erhalten.

Die EP 1 308 725 zeigt ein Verfahren zur Bestimmun der Feuchte von Zement. Die Feuchte wird durch lineare Regression ermittelt, in der eine Temperaturvariable miteinbezogen wird.

Die WO 90/07110 A1 offenbart ein Verfahren zur kontinuierlichen Erfassung der Feuchtigkeit eines Schüttgutes im On-line-Betrieb, insbesondere für Nahrungsoder Futtermittelkomponenten, wobei ein Mikrowellenfeld erzeugt und die Temperatur des Schüttgutes gemessen wird.

Zusammenfassung der Erfindung

Es ist eine Aufgabe der Erfindung, ein Messgerät zur Feuchtigkeitsbestimmung eines Materials anzugeben, welches einen geringen Energiebedarf aufweist.

Es ist weiterhin eine Aufgabe der Erfindung, ein Messgerät zur Feuchtigkeitsbestimmung eines Materials anzugeben, welches den Messwert für die Feuchte des Füllgutes mit erhöhter Genauigkeit bereitstellt.

Diese Aufgabe wird durch die Merkmale der unabhängigen Patentansprüche gelöst. Weiterbildungen der Erfindung ergeben sich aus den Unteransprüchen und der folgenden Beschreibung.

Gemäß einem ersten Aspekt der Erfindung ist ein Füllstandmessgerät zur Bestimmung eines Füllstands eines Schüttgut-Füllmediums angegeben, welches eine Hochfrequenzeinheit und eine Signalverarbeitungseinheit aufweist. Die Hochfrequenzeinheit dient dem Erzeugen eines Messsignals, welches daraufhin in Richtung Füllmediumoberfläche freistrahlend oder geführt abgestrahlt wird.

Es ist ein Temperatursensor an oder in einem Straffgewicht oder in einem Messgerätegehäuse des Füllstandmessgeräts vorgesehen, zur Erfassung eines Temperaturmesswerts zur Bestimmung einer Temperatur.

Dieses Messsignal wird dann ganz oder teilweise an der Füllmediumoberfläche und an einem oder mehreren weiteren Reflektoren, wie dem Behälterboden, einem Sondenende oder anderen Störstellen, reflektiert. Das reflektierte Messsignal wird daraufhin der Signalverarbeitungseinheit des Füllstandmessgeräts zugeführt, welche daraus eine Echokurve gewinnt und aus dieser Echokurve dann den Füllstand bestimmt.

Darüber hinaus ist das Füllstandmessgerät in der Lage, aus dieser Echokurve zusätzlich die Feuchtigkeit oder zumindest einen Kennwert für die Feuchtigkeit (also einen mit der Feuchtigkeit zusammenhängenden Wert) des Füllmediums zu bestimmen. Das Füllstandmessgerät ist ausgeführt zur Verwendung des Temperaturmesswerts für die Verbesserung der Genauigkeit der Feuchtigkeitsbestimmung.

Im Vergleich zu bekannten Verfahren und Vorrichtungen kann hierdurch Energie gespart werden, da aus einer einzelnen Messung sowohl der Füllstand als auch die Feuchtigkeit bestimmt werden kann.

Es handelt sich nicht um eine direkte Laufzeitmessung mit einer zusätzlichen Sonde, sondern vielmehr um die Auswertung einer bereits im Zuge der Füllstandbestimmung durchgeführten Messung.

Gemäß einer Ausführungsform der Erfindung ist ein Füllstandmessgerät zur Bestimmung eines Füllstands eines Füllmediums angegeben, welches aus zwei Amplitudenwerten zweier Echos einer Echokurve und einem Abstand zweier Echos der gleichen Echokurve einen Messwert für den aktuellen Füllstand und weiterhin einen Messwert für die Feuchte des Füllgutes ermittelt. Durch die Verwendung von Amplituden- und Abstandsinformationen kann die Feuchte des Mediums mit erhöhter Genauigkeit bereitgestellt werden. Es mag besonders vorteilhaft sein, die Informationen derart zu verarbeiten, dass sowohl der Messwert für den Füllstand als auch der Messwert für die Feuchte mit hoher Genauigkeit und geringem Schaltungs- und / oder Energieaufwand ermittelt und bereitgestellt werden können.

Gemäß einer Ausführungsform der Erfindung ist das Füllstandmessgerät zum Anschluss an eine Zweileiterschleife, beispielsweise eine 4...20 mA Zweileiterschleife, ausgeführt. Hierfür weist es eine Zweileiterschnittstelle, beispielsweise eine 4...20 mA Zweileiterschnittstelle, auf. Über diese Zweileiterschleife kann es mit der für seinen Betrieb notwendigen elektrischen Energie versorgt werden. Auch kann die Zweileiterschleife zur Übertragung sämtlicher oder einer Untermenge der Messwerte, die mit dem Füllstand und/oder der Feuchtigkeit zusammenhängen, an eine externe Stelle genutzt werden.

Alternativ oder zusätzlich kann vorgesehen sein, dass ein Teil der Messwerte (beispielsweise die Feuchtigkeitsmesswerte oder die Füllstandmesswerte) über eine zweite Datenschnittstelle, welche beispielsweise in Form einer zweiten Zweileiterschnittstelle oder einer Datenbusschnittstelle ausgeführt sein kann, übertragen werden.

Gemäß einer weiteren Ausführungsform der Erfindung handelt es sich bei dem Messsignal um ein FMCW-Signal. In anderen Worten handelt es sich bei dem Füllstandmessgerät um ein nach dem FMCW-Prinzip arbeitendes Messgerät, welches frequenzmodulierte kontinuierliche Wellen als Messsignal aussendet.

Gemäß einer weiteren Ausführungsform der Erfindung handelt es sich bei dem Messsignal um einen elektromagnetischen Puls. In diesem Fall handelt es sich bei dem Füllstandmessgerät um ein nach dem Puls-Laufzeitverfahren arbeitendes Füllstandradar.

Gemäß einer weiteren Ausführungsform der Erfindung weist das Füllstandmessgerät eine Zweileiterschnittstelle auf, wobei das Füllstandmessgerät zur Energieversorgung und zur Ausgabe sämtlicher Messwerte des Füllstandmessgeräts über die Zweileiterschnittstelle ausgeführt ist.

Gemäß einer weiteren Ausführungsform der Erfindung weist das Füllstandmessgerät neben der Zweileiterschnittstelle eine zusätzliche Datenschnittstelle auf, wobei das Füllstandmessgerät zur Energieversorgung und zur Ausgabe eines ersten Messwertes ausgewählt aus der Gruppe der Messwerte Füllstand und Feuchtigkeit über die Zweileiterschnittstelle ausgeführt ist, und wobei das Füllstandmessgerät zur Ausgabe der eines zweiten Messwertes ausgewählt aus der Gruppe der Messwerte Füllstand und Feuchtigkeit über die Datenschnittstelle ausgeführt ist.

Bei der Datenschnittstelle kann es sich um eine zweite Zweileiterschnittstelle oder beispielsweise eine Datenbusschnittstelle handeln.

Gemäß einer weiteren Ausführungsform der Erfindung ist das Messgerät zur Verwendung freistrahlender elektromagnetischer Wellen als Messsignal ausgeführt.

Gemäß einer weiteren Ausführungsform der Erfindung ist das Füllstandmessgerät als Messgerät zur Verwendung geführter Mikrowellen als Messsignal ausgeführt. In diesem Falle weist es eine Messsonde (Wellenleitereinrichtung) auf, die zumindest teilweise in das Füllgut hineinragt (jedenfalls bei entsprechend hohem Füllstand).

Gemäß einer weiteren Ausführungsform der Erfindung weist das Füllstandmessgerät eine Wellenleitereinrichtung auf, welche mehrere, zueinander entlang einer Längserstreckungsrichtung der Wellenleitereinrichtung beabstandet angeordnete Reflektoren aufweist. Das Füllstandmessgerät ist in diesem Falle zur Bestimmung eines Feuchtigkeitsprofils aus der Echokurve ausgeführt, welches sich entlang der Längserstreckung der Wellenleitereinrichtung erstreckt. Zur Erstellung des Feuchtigkeitsprofils sind die verschiedenen Reflektoren, die entlang der Wellenleitereinrichtung angeordnet sind, notwendig, da jeder Reflektor einen Teil des Messsignals reflektiert und diese Reflexionen dann in der erfassten Echokurve detektiert werden können.

Ein Aspekt der Erfindung betrifft demnach ein Feldgerät zur kombinierten Messung von Füllstand und Feuchte eines Materials in einem Behälter oder auf einer Halde, wobei die Versorgung und Messwertausgabe über nur ein Leiterpaar erfolgt.

Insbesondere kann die Messung beider Kennwerte (Füllstand und Feuchtigkeit) auf der Reflexion einer gepulsten elektromagnetischen Welle und der Bestimmung der reflektierten Wellenanteile hinsichtlich Amplitude und Zeit unter Verwendung des Verfahrens der sequentiellen Abtastung erfolgen.

Auch kann vorgesehen sein, dass die Versorgung und Messwertausgabe über genau zwei Leiterpaare erfolgt, wobei ein Leiterpaar eine 4 ... 20 mA-Leiterschleife zur Versorgung des Feldgeräts und Ausgabe des einen Messwerts und das andere Leiterpaar eine 4 ... 20 mA-Leiterschleife (passiv) zur Ausgabe des anderen Messwerts ist.

Durch die Verwendung der gleichen Messsignale für beide Messungen (Füllstand und Feuchtigkeit) steigt der Energiebedarf im Vergleich zu bekannten Sensoren, welche nur für eine der beiden Messungen vorgesehen sind, nur unwesentlich. Somit ist eine Zweileiterfähigkeit für den kombinierten Sensor gegeben.

Damit gleiche Messignale verwendet werden können, ist die Messung beider Kennwerte auf der Reflexion einer gepulsten elektromagnetischen Welle und der Bestimmung der reflektierten Wellenanteile hinsichtlich Amplitude und Zeit unter Verwendung des Verfahrens der sequentiellen Abtastung vorteilhaft.

Auch ist ein Verfahren zum Bestimmen eines Füllstands eines Füllmediums angegeben, bei dem ein Messsignal erzeugt wird, der Füllstand aus einer Echokurve des Messsignals bestimmt wird und eine Feuchtigkeit des Füllmediums aus eben dieser Echokurve bestimmt wird.

Gemäß einer weiteren Ausführungsform der Erfindung erfolgt die Versorgung eines das Verfahren durchführenden Geräts mit elektrischer Energie über eine Zweileiterschleife, beispielsweise eine 4...20 mA Stromschleife.

Auch kann die Messwertausgabe über diese Zweileiterschleife erfolgen. Wie bereits oben beschrieben kann auch vorgesehen sein, dass ein Teil der Messwerte über eine andere Schnittstelle ausgegeben wird.

Eine Zweileiterschleife mag eine Installationsanordnung eines Feldgerätes (beispielsweise eines Füllstandmessgerät, Feuchtemessgerätes, ...) beschreiben, bei welcher das Gerät ausschließlich über ein einziges Leiterpaar mit der notwendigen Energie versorgt wird und gleichzeitig die Ausgabe zumindest eines Messwertes über dieses Leiterpaar erfolgt.

Eine Zweileiterschnittstelle mag eine Schnittstelle eines Feldgerätes (beispielsweise eines Füllstandmessgerät, Feuchtemessgerätes, ...) sein, über welche das Gerät innerhalb einer Zweileiterschleife betrieben werden kann. Eine Zweileiterschnittstelle mag ausgewählt sein aus der Gruppe der standardisierten Schnittstellen 4...20mA Stromschleife, 4...20mA Stromschleife mit HART, Profibus, PA, Foundation Fieldbus.

Ein Zweileitergerät mag ein Feldgerät (beispielsweise eines Füllstandmessgerät, Feuchtemessgerätes, ...) sein, welches über zumindest eine Zweileiterschnittstelle verfügt.

Gemäß einem weiteren Aspekt der Erfindung ist ein Programmelement angegeben, das, wenn es auf einem Prozessor ausgeführt wird, den Prozessor anweist, die oben und im Folgenden beschriebenen Schritte durchzuführen.

Gemäß einem weiteren Aspekt der Erfindung ist ein computerlesbares Medium angegeben, auf dem ein Programmelement gespeichert ist, das, wenn es auf einem Prozessor ausgeführt wird, den Prozessor anweist, die oben und im Folgenden beschriebenen Verfahrensschritte durchzuführen.

Es sei darauf hingewiesen, dass die oben und im Folgenden beschriebenen Füllstandmessgeräte ausgeführt sein können, sämtliche hier und im Folgenden beschriebenen Verfahrensschritte durchzuführen.

Das Programmelement kann Teil einer Software sein, die auf einem Prozessor eines Messgeräts gespeichert ist. In diesem Fall ist der Prozessor ebenfalls Gegenstand der Erfindung. Die Erfindung betrifft ebenfalls ein Programmelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

Kurze Beschreibung der Figuren

Fig. 1 zeigt ein Füllstandradargerät.

Fig. 2 zeigt ein Füllstandmessgerät, das nach dem Prinzip der geführten Mikrowellen arbeitet.

Fig. 3 zeigt ein Feuchtigkeitsmessgerät.

Fig. 4 zeigt ein Füllstandmessgerät gemäß einem Ausführungsbeispiel der Erfindung.

Fig. 5 zeigt ein Füllstandmessgerät gemäß einem weiteren Ausführungsbeispiel der Erfindung.

Fig. 6 zeigt ein Füllstandmessgerät gemäß einem weiteren Ausführungsbeispiel der Erfindung.

Fig. 7 zeigt drei Füllstandmessgeräte gemäß weiteren Ausführungsbeispielen der Erfindung.

Fig. 8 zeigt ein Flussdiagramm eines Verfahrens.

Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Fig. 1 zeigt ein Radar-Füllstandmessgerät 105 nach dem Stand der Technik. Das Radargerät erzeugt mit Hilfe einer Hochfrequenzeinheit 101 ein hochfrequentes Messsignal 102 und strahlt dieses über eine geeignete Antenne 103 in Richtung einer Füllgutoberfläche 104 ab. An dieser wird das Signal 102 reflektiert, und gelangt nach entsprechender Laufzeit zurück zum Füllstandmessgerät 105, wo es von der Hochfrequenzeinheit 101 in bekannter Weise aufbereitet und einer Auswerteeinheit 106 übergeben wird. Diese berechnet auf Basis der Laufzeit die Entfernung zum Füllgut 104.

Von wirtschaftlicher Bedeutung sind insbesondere Füllstandmessgeräte 105, welche über eine 4 ... 20 mA Stromschleife 109 mit Energie versorgt werden. Das Füllstandmessgerät 105 weist in diesem Fall ein geeignetes Netzteil 107 auf, welches insbesondere eine Energiespeichereinheit und eine Energiesteuereinheit beinhaltet, und welches die weiteren Komponenten des Sensors in geeigneter Weise zur Sicherstellung eines stabilen Messbetriebes ansteuert. Der vom Sensor ermittelte Füllstandwert kann in analoger Weise über die 4 ... 20 mA Schnittstelle 106 nach außen hin bereitgestellt werden.

Möglich ist auch die Bereitstellung des Messwertes in digitaler Form, beispielsweise unter Verwendung von HART, Profibus, FF oder Modbus.

Weiterhin ist es möglich, den Füllstand mit geführten Mikrowellen zu ermitteln. Fig. 2 zeigt ein entsprechendes Gerät. Im Vergleich zu einem freistrahlenden Radargerät 105 weist das Gerät nach dem Prinzip geführter Mikrowellen einen geeigneten Wellenleiter 202 auf, welcher ein Messsignal 203 zur Füllgutoberfläche 104 und wieder zurück zum Messgerät 201 führt. Die Ermittlung des Messwertes erfolgt in ähnlicher Weise wie beim Radargerät 105. Das Gerät kann den ermittelten Messwert ebenfalls über eine 4 ... 20 mA Schnittstelle oder digitale Feldbusse nach außen hin bereitstellen.

Zur Bestimmung der Feuchte des zu messenden Mediums 108 können hingegen spezielle Feuchtigkeitsmessgeräte verwendet werden. Ein solches Messgerät ist in Fig. 3 abgebildet. Das Messgerät 301 mag aus einer Sondeneinheit 303 bestehen, welche eine oder mehrere Einzelsonden 306 aufweist. Unter Verwendung geführter Mikrowellen wird die Laufzeit des Signals auf der komplett im Medium befindlichen Sonde ermittelt, und einer Messumformereinheit 302 übergeben, welche die Ansteuerung und Energieversorgung der Sondeneinheit 303 realisiert.

Die Messumformereinheit 302 ermittelt aus den Laufzeiten des Signals entlang der Sonde 306 eine Dielektrizitätszahl $\varepsilon'_R$, welche unter Berücksichtigung von vorab einzustellenden Medieneigenschaften in einen Feuchtigkeitswert F überführt werden kann. In einer guten Näherung kann hier von proportionalem Verhalten ausgegangen werden:

$$F = c \cdot \varepsilon'_R$$

wobei c eine vom Medium (und ggf. der Temperatur) abhängige, vorab für das Füllmedium bekannte Konstante ist.

Der ermittelte Feuchtigkeitswert kann an einer geeigneten digitalen Schnittstelle 304, beispielsweise RS-232, nach außen hin bereitgestellt werden.

Darüber hinaus weist das Feuchtemessgerät 302 üblicherweise eine weitere Schnittstelle 305 auf, welche die Sensoreinheit 301 mit Energie versorgt.

Die gleichzeitige Messung von Füllstand und Feuchtigkeit ist mit diesen Sensoren nicht vorgesehen. Darüber hinaus ermitteln Feuchtigkeitsmessgeräte die Laufzeit entlang der Messsonden 306 durch direkte Zeitmessverfahren, was aufgrund der extrem kurzen Zeiträume zu großen Messungenauigkeiten führen kann. Eine Verbesserung der Genauigkeit kann durch Mittelung einer Vielzahl von Messungen erreicht werden, welche wiederum den Energiebedarf des Feuchtemessgerätes 301 massiv erhöht, und folglich die Realisierung als 4 ... 20 mA Zweileitergerät verhindert.

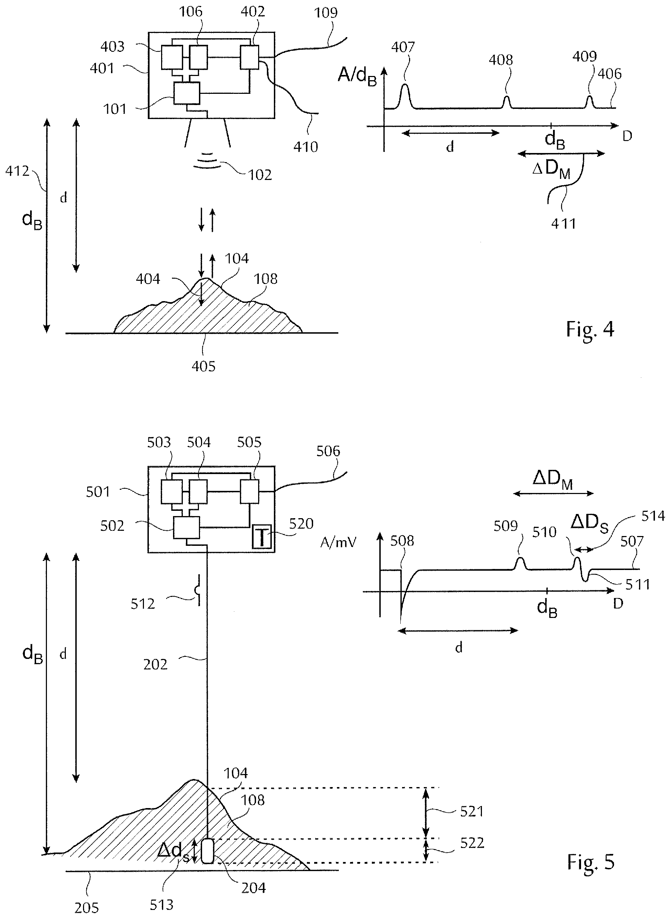

Fig. 4 zeigt eine erste Ausführungsform eines Füllstandmessgeräts, welches Füllstand- und Feuchtigkeitsmessung in einem Zweileitermessgerät zum Anschluss an eine 4 ... 20 mA Zweileiterschleife kombiniert.

Das Messgerät 401 besitzt eine Hochfrequenzeinheit 101, eine Signalverarbeitungseinheit 106 sowie eine modifizierte Energieversorgungseinheit 402. Darüber hinaus besitzt das Messgerät 401 eine Feuchtigkeitsermittlungseinheit 403.

Das Messgerät 401 sendet ein Hochfrequenzsignal 102 in Richtung des zu vermessenden Mediums 108. Ein Teil der Mikrowellenenergie wird an der Oberfläche 104 des Mediums 108 reflektiert, und gelangt nach entsprechender Laufzeit zurück zum Messgerät 401.

Ein anderer Teil der Mikrowellenenergie 404 dringt in das Medium 108 ein, und wird erst an der unteren Grenze 405 des Mediums reflektiert. Die untere Grenze wird oft durch den Behälterboden realisiert. Die Hochfrequenzeinheit 101 verarbeitet die empfangenen Signale, und kann nach bekannten Verfahren eine Echokurve 406 in digitaler oder analoger Weise bereitstellen. Die Echokurve beinhaltet neben dem durch direkte Reflektionen innerhalb der Antenne entstandenen Antennenecho 407 das von der Reflektion an der Oberfläche 104 herrührende Füllstandecho 408 und darüber hinaus das von der Reflektion am Behälterboden 405 entstandene Bodenecho 409.

Die Signalverarbeitungseinheit 106 kann auf Basis der Echokurve 406 nach bekannten Verfahren die Entfernung d zur Füllgutoberfläche ermitteln. Die ermittelte Entfernung kann in analoger Weise an einer 4 ... 20 mA Schnittstelle 109 bereitgestellt werden. Der Wert kann alternativ oder zusätzlich über eine digitale Schnittstelle bereitgestellt werden.

Nach der Ermittlung der Entfernung d zur Füllgutoberfläche ermittelt die Feuchteermittlungseinheit 403 unter Verwendung der Echokurve 406 und der Entfernung d zur Füllgutoberfläche die Feuchtigkeit des Mediums 108. Die Feuchteermittlungseinrichtung 403 mag hierzu mit den notwendigen Materialkennwerten vorab parametriert worden sein. An dieser Stelle sei angemerkt, dass die Feuchteermittlungseinheit 403 als Teil der Signalverarbeitungseinheit oder als separates Bauteil vorgesehen sein kann.

Die Ermittlung der Materialfeuchte F selbst kann nach unterschiedlichen Verfahren vorgenommen werden. Möglich ist die Auswertung der Amplitude $A_L$ des Füllgutechos 408, aus welcher bei bekannten Materialkennwerten auf die Feuchtigkeit geschlossen werden kann. Es gilt in guter Näherung:

$$F = c \cdot \left( \frac{A_E - A_L}{A_E + A_L} \right)^2$$

wobei c eine vom Medium (und ggf. der Temperatur) abhängige, vorab bekannte Konstante, $A_E$ die Maximalamplitude des vom Füllstandmessgerät emittierten Signals und $A_L$ die Amplitude des Füllgutechos ist.

Möglich ist auch die Auswertung der Dämpfung der Mikrowellensignale 102 im Material 108, welche aus der Amplitude des Füllgutechos 408 und der Amplitude des Bodenechos 409 ermittelt werden kann. Aus der Dämpfung kann in bekannter Weise unter Zuhilfenahme spezieller Materialkennwerte auf die Feuchtigkeit des Mediums geschlossen werden.

Der Dämpfungskoeffizient a ist definiert durch:

$$\alpha = \frac{2\pi}{\lambda_0} \cdot \sqrt{\frac{\varepsilon_R'}{2}} \cdot \sqrt{\sqrt{1 + \left( \frac{\varepsilon_R''}{\varepsilon_R'} \right)^2} - 1}$$

Wobei

$\lambda_0$ Wellenlänge des zur Messung verwendeten Signals

$\varepsilon_R'$ Realteil der komplexwertigen Dielektrizitätszahl

$\varepsilon_R''$ Imaginärteil der komplexwertigen Dielektrizitätszahl

Messtechnisch lässt sich die Dämpfung $D_M$ im Medium nach folgender Gleichung bestimmen:

$$D_M = \frac{A_B}{\left( \sqrt{A_H} - \sqrt{\frac{A_L^2}{A_H}} \right)^2}$$

Wobei

$A_B$ Amplitude des Bodenechos

$A_H$ Maximalamplitude des vom Füllstandmessgerät emittierten Signals

$A_L$ Amplitude des Füllgutechos

Der Dämpfungskoeffizient $\alpha$ kann nun mit der vorbekannten Distanz $d_B$ zum Behälterboden und der aktuellen Distanz d zum Füllgut berechnet werden durch:

$$\alpha = \frac{D_M}{d_B - d}$$

Unter Berücksichtigung vorab bekannter, materialspezifischer oder vernachlässigbar kleiner Kennwerte für den Imaginärteil der Dielektrizitätszahl lässt sich durch Umformung der Realteil der Dielektrizitätszahl bestimmen, woraus direkt auf die Feuchte des Mediums geschlossen werden kann. Die Umrechnung und Lösung dieser nichtlinearer Zusammenhänge mag im Gerät insbesondere unter Verwendung numerischer Näherungsverfahren durchgeführt werden.

In einer dritten Variante mag die Feuchtigkeit auch aus dem Abstand $\Delta D_M$ 411 des Füllgutechos 408 vom Bodenecho 409 unter Verwendung der Behälterhöhe $d_B$ 412 sowie materialabhängiger Kennwerte ermittelt werden.

Der Phasenkoeffizient $\beta$ ist definiert durch:

$$\beta = \frac{2\pi}{\lambda_0} \cdot \sqrt{\frac{\varepsilon_R'}{2}} \cdot \sqrt{\sqrt{1 + \left( \frac{\varepsilon_R''}{\varepsilon_R'} \right)^2} + 1}$$

Wobei

$\lambda_0$ Wellenlänge des zur Messung verwendeten Signals

$\varepsilon_R'$ Realteil der komplexwertigen Dielektrizitätszahl

$\varepsilon_R''$ Imaginärteil der komplexwertigen Dielektrizitätszahl

Messtechnisch lässt sich die Phasendrehung im Medium anhand der Verlängerung des Abstandes $\Delta D_M$ (411) zwischen dem Füllgutecho und dem Bodenecho auswerten. Es gilt:

$$\frac{\Delta D_M}{d_B - d} = \sqrt{\frac{\varepsilon_R'}{2}} \cdot \sqrt{\sqrt{1 + \left( \frac{\varepsilon_R''}{\varepsilon_R'} \right)^2} + 1}$$

Wobei

$d_B$ physikalische Distanz vom Messgerät zum Behälterboden

d physikalische Distanz vom Messgerät zur Füllgutoberfläche

Unter Berücksichtigung vorab bekannter, materialspezifischer oder vernachlässigbar kleiner Kennwerte für den Imaginärteil der Dielektrizitätszahl lässt sich durch Umformung der Realteil der Dielektrizitätszahl bestimmen, woraus direkt auf die Feuchte des Mediums geschlossen werden kann. Die Umrechnung und Lösung dieser nichtlinearer Zusammenhänge mag im Gerät insbesondere unter Verwendung numerischer Näherungsverfahren durchgeführt werden.

Es mag auch möglich sein, zumindest zwei der oben angegebenen Verfahren zu kombinieren. So mag es insbesondere vorteilhaft sein, sowohl die Dämpfung des Signals innerhalb des Mediums als auch die sich in der Verlängerung des Abstandes $\Delta D_M$ abbildende Phasendrehung innerhalb einer einzigen Messung auszuwerten, und anschließend unter Verwendung numerischer Verfahren anhand obiger Gleichungen die exakten Werte für den Real- und Imaginärteil der Dielektrizitätszahl zu ermitteln. Auf diese Weise mag eine noch genauere Messung der Feuchtigkeit im Medium möglich werden.

Der ermittelte Feuchtigkeitswert mag der Kommunikationseinheit 402 übergeben werden, und wird von dieser nach außen hin bereitgestellt. Dazu mag der Sensor eine zweite analoge 4 ... 20 mA Schnittstelle 410 aufweisen. Es mag aber auch möglich sein, den Kennwert in analoger und / oder digitaler Form an der bereits vorhandenen Schnittstelle 109 bereitzustellen.

Es sei an dieser Stelle daraufhingewiesen, dass im Kontext der vorliegenden Erfindung eine Feuchte oder ein Feuchtewert oder eine Feuchtigkeit oder ein Feuchtigkeitswert zumindest ein Wert ausgewählt aus der Gruppe der ermittelbaren Werte massenbezogener Feuchtegehalt, massenbezogener Feuchteanteil, Trockenmassenanteil, volumenbezogener Feuchtegehalt und volumenbezogener Feuchteanteil sein kann.

Die modifizierte Energieversorgungseinheit 402 sichert den stabilen Ablauf der eigentlichen Messdatenerfassung. Im Vergleich zu bestehenden Geräten zur reinen Füllstandmessung ergeben sich nur minimal höhere Anforderungen in Bezug auf die Energieversorgung, da der eigentlich energieintensive Vorgang der Echokurvenerfassung in der Hochfrequenzeinheit 101 wie in einem konventionellen Füllstandmessgerät nur ein Mal pro Messzyklus durchlaufen werden muss. Die Ermittlung der Feuchtekennwerte in der Einheit 403 mag zusammen mit der Signalverarbeitung 106 in Form von Softwarealgorithmen auf einem ehedem schon vorhandenen Prozessor realisiert sein, und erfordert nur ein Minimum an zusätzlicher Energie.

Es mag zudem eine Besonderheit des Messgerätes sein, dass die Echokurvenerfassung in der Hochfrequenzeinheit 101 durch ein sequentielles Samplingverfahren besonders energiesparend realisiert werden kann. Im Vergleich zu direkten Zeitmessverfahren, wie sie in reinen Feuchtemessgeräten verwendet werden können, ergibt sich hier eine deutliche Energieeinsparung, welche die Konstruktion des kombinierten Sensors als Zweileitermessgerät ermöglicht. Zu den weiteren Vorteilen des sequentiellen Samplingverfahrens zählen darüber hinaus eine erhöhte Dynamik, welche auch die Erfassung von sehr kleinen Echos ermöglicht, sowie eine höhere Messrate.

Fig. 5 zeigt ein weiteres Ausführungsbeispiel einer Messeinrichtung. Das Messgerät 501 arbeitet nach dem Prinzip der geführten Mikrowelle, und sendet hochfrequente Messsignale entlang einer Wellenleitereinrichtung 202 in Richtung des zu messenden Mediums 108. Die Wellenleitereinrichtung mag in elektrisch isolierter oder nicht isolierter Ausprägung durch ein Seil, einen Stab, einen Koaxialleiter oder auch durch Anordnungen mehrerer Stäbe oder Seile realisiert sein. Es mag zudem möglich sein, die Wellenleitereinrichtung bei der Realisierung mit Seilen durch Straffgewichte 204 entlang der zu messenden Strecke zu fixieren. Zudem mag auch eine nicht dargestellte Abspannung am Behälterboden 205 realisiert sein.

Das Messgerät 501 kann aus der auch in anderen Füllstandmessgeräten vorhandenen Hochfrequenzeinheit 502, der Signalverarbeitungseinheit 504 sowie der Schnittstelle zu einer übergeordneten Steuerung 506, welche typischerweise als 4 ... 20 mA Schnittstelle ausgeführt ist, bestehen. Darüber hinaus besitzt das Messgerät 501 eine Feuchtebestimmungseinrichtung 503 sowie eine Energieversorgungs- und Kommunikationseinheit 505.

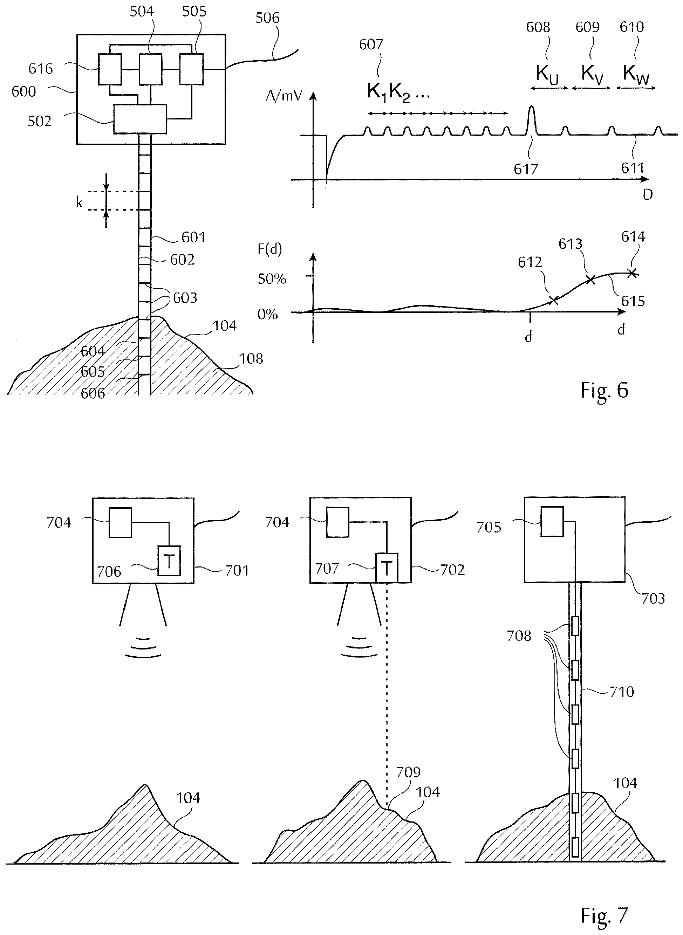

Auch kann eine Temperaturerfassungseinrichtung 520 vorgesehen sein. Die Temperaturerfassungseinrichtung 520, im Folgenden auch Temperatursensor genannt, kann sich beispielsweise im oder am Strafgewicht 204 befinden. Alternativ oder zusätzlich hierzu kann eine Temperaturerfassungseinrichtung 706, 707 im Inneren des Messgeräts 501 angeordnet sein, so wie die in Fig. 7 dargestellt ist.

Die im Sensorinneren gemessene Temperatur kann mit Hilfe im Werk ermittelter Kennwerte und unter Berücksichtigung der z.B. ab Werk vorgegebenen Länge L der Sonde 202 in einen Schätzwert für die Temperatur des Mediums 108 überführt werden. Die Temperaturmessung kann hierbei in besonders vorteilhafter Weise in unmittelbarer Nähe zur Mündungsstelle der Sonde 202 in dem Messgerät 501 angeordnet sein. Durch diesen konstruktiven Aufbau kann die Wärmeleitfähigkeit der aus Metall gefertigten Sonde 202 zur mittelbaren Messung der Temperatur des Mediums 108 verwendet werden. Im Inneren der Sonde 202 bildet sich ein über den jeweiligen Messzyklus konstanter Wärmestrom aus. Aus dem Abstand des Mediums vom Messgerät (entspricht dem aktuellen Füllstandwert) und der Wärmeleitfähigkeit des Metalls in Verbindung mit der erfassten Temperaturänderung an der Mündung der Sonde kann direkt auf die Temperatur des Mediums geschlossen werden.

Weitere Verbesserungen ergeben sich bei Berücksichtigung der kühlenden Wirkung der Verbindung der Sonde 202 zum Sensor 501. Wird diese als Kühlkörper betrachtet, so kann deren Kühlleistung vorab im Werk bestimmt werden. Gegebenenfalls wirksam werdende Veränderungen der vom Kühlkörper abgeführten Wärme können rechnerisch berücksichtigt werden, wenn über einen zweiten, hier nicht dargestellten Temperatursensor an der Außenwandung 501 des Sensors die jeweilige Temperatur der Umgebung gemessen wird. Die Messung des real vorhandenen Temperaturunterschiedes am sich ergebenden Kühlkörper ermöglicht die Bestimmung des Wärmestroms, aus welchem wiederum bei Berücksichtigung der Wärmeleitfähigkeit direkt auf die Temperatur des Mediums geschlossen werden kann (Fourier'sches Gesetz).

Die Temperaturerfassungseinrichtung erfasst einen Temperaturmesswert, der zur Verbesserung der Genauigkeit der Feuchtigkeitsbestimmung hinzugezogen werden kann.

Die ermittelten Temperaturwerte können die Bestimmung des Feuchtigkeitswertes auf Basis der vom Füllstandmessgerät erfassten Echokurve deutlich verbessern.

Eine Vorschrift zur Korrektur der Feuchtigkeit des Füllmediums in Abhängigkeit von der Temperatur kann beispielsweise im Rahmen der Fertigung des Füllstandmessgeräts fest in dieses einprogrammiert werden, so dass während des Betriebs des Messgeräts direkt auf die entsprechende Temperaturkompensationskurven zugegriffen werden kann.

Alternativ oder zusätzlich kann am Messgerät oder am Strafgewicht eine Schnittstelle für einen externen Temperatursensor, zum Beispiel PT 100, vorgesehen sein.

Der Temperatursensor kann ausgeführt sein, die erfassten Daten über eine im Wellenleiter 202, der beispielsweise als Seil ausgeführt ist, angeordnete Datenübertragungs- uns Energieversorgungsleitungsanordnung an die Elektronik 502-505 des Messgeräts zu übertragen.

Es kann vorgesehen sein, dass das Messgerät die Feuchtigkeit in zwei oder mehreren Bereichen der Messsonde inklusive Straffgewicht 202, 204 bestimmt, indem verschiedene Abschnitte der Echokurve analysiert werden. Auf diese Weise kann ein Feuchtigkeitsverlauf in Form einer zwei- oder mehrstufigen Treppenfunktion bestimmt werden.

Beispielsweise kann als erster Feuchtigkeitsmessbereich derjenige Bereich der Echokurve verwendet werden, der auf den sich im Füllgut befindenden Bereich 521 der Messsonde zurückzuführen ist. Als zweiter Feuchtigkeitsmessbereich kann derjenige Bereich der Echokurve verwendet werden, der auf die Länge 522 des Straffgewichts 204 oder eines anderen Referenzkörpers zurückzuführen ist.

Auf entsprechende Weise lässt sich der Feuchtigkeitsverlauf auch bei berührungslos messenden Füllstandmessgeräten bestimmen. Als Reflektoren, die in der Echokurve identifiziert werden können, lassen sich die Bohrungen in einem Standrohr oder im Behälter angebrachte Referenzmessstelle(n) verwenden.

Das Messgerät 501 erfasst zunächst eine Echokurve 507, welche die Reflexionsverhältnisse entlang des Wellenleiters 202 widerspiegelt. Die Echokurve 507 enthält zunächst das Echo 508 vom Übergang auf den Wellenleiter 202, und darüber hinaus das von der Füllgutoberfläche 104 erzeugte Füllgutecho 509. Im vorliegenden Beispiel besitzt die Wellenleitereinrichtung 202 ein Straffgewicht 204, welches sich durch zwei Echos 510, 511 in der Echokurve abbildet, wobei das erste Echo den Anfang des Straffgewichtes und das zweite Echo das Ende des Straffgewichtes kennzeichnet.

Der Ablauf eines Messzyklus im Messgerät 501 mag in gleicher Weise wie im oben beschriebenen Radargerät 401 erfolgen. Auch für die eigentliche Bestimmung der Materialfeuchte mögen die gleichen Verfahren und Ansätze verwendet werden. Darüber hinaus ergeben sich zusätzliche Möglichkeiten zur Bestimmung der Feuchte des Materials 108.

Prinzipiell wird die Ausbreitungsgeschwindigkeit eines Mikrowellensignals 512, 102 in einem Medium 108 in Abhängigkeit von den Materialeigenschaften (Dielektrizitätskonstante, Körnung, Verdichtung) und von der Feuchtigkeit des Materials reduziert. Messtechnisch macht sich dies in der Echokurve dadurch bemerkbar, dass der Abstand zweier Reflexionsstellen innerhalb des Mediums in der Echokurve vergrößert erscheint. Im dargestellten Beispiel der Fig. 5 ist der physikalische Abstand $\Delta d_S$ 513 zwischen dem oberen Ende des Straffgewichtes 204 und dessen unteren Ende in der Echokurve 507 deutlich vergrößert dargestellt ($\Delta D_S$, 514).

Aus der messtechnisch erfassten Verlängerung des Abstandes dieser beiden Echos kann unter Verwendung des vorab bekannten, physikalischen Abstandes $l_S$ der zugehörigen Reflexionsstellen auf die momentane Dielektrizitätszahl des Mediums geschlossen werden, welche bei Kenntnis der zugehörigen Materialkennwerte direkt in einen Feuchtigkeitswert umgerechnet werden kann.

Es gilt:

$$\frac{\Delta D_S}{l_S} = \sqrt{\frac{\varepsilon_R'}{2} \cdot \sqrt{1 + \left(\frac{\varepsilon_R''}{\varepsilon_R'}\right)^2} + 1}$$

Wobei

$\Delta D_S$    Abstand der beiden Echos des Straffgewichtes in der Echokurve

$l_S$    Physikalische Länge des Straffgewichtes

Unter Berücksichtigung vorab bekannter, materialspezifischer oder vernachlässigbar kleiner Kennwerte für den Imaginärteil der Dielektrizitätszahl lässt sich durch Umformung der Realteil der Dielektrizitätszahl bestimmen, woraus nach den bereits offenbarten Zusammenhängen direkt auf die Feuchte des Mediums geschlossen werden kann.

Es mag zudem eine Besonderheit des Messgerätes 501 sein, dass die Echokurvenerfassung in der Hochfrequenzeinheit 502 durch ein sequentielles Samplingverfahren besonders energiesparend realisiert werden kann. Im Vergleich zu direkten Zeitmessverfahren, wie sie in reinen Feuchtemessgeräten verwendet werden können, ergibt sich hier eine deutliche Energieeinsparung, welche die Konstruktion des kombinierten Sensors als Zweileitermessgerät ermöglicht. Zu den weiteren Vorteilen des sequentiellen Samplingverfahrens zählen darüber hinaus eine erhöhte Dynamik, welche auch die Erfassung von sehr kleinen Echos ermöglicht, sowie eine höhere Messrate.

Da die Füllgutentfernungen im Bereich von wenigen Zentimetern bis zu mehreren Metern liegen, und die Ausbreitungsgeschwindigkeit elektromagnetischer Wellen selbst in einem Medium nahe der Lichtgeschwindigkeit ist, ergeben sich Hochfrequenz - Signallaufzeiten im Bereich von einigen Nanosekunden. Um diese sehr genau bestimmen zu können, bietet es sich an, den Spannungsverlauf des empfangenen elektrischen Signals, das die Reflexionsverhältnisse entlang der Ausbreitungsrichtung der elektromagnetischen Welle widerspiegelt, um mehrere Zehnerpotenzen gedehnt abzubilden.

Dies geschieht durch ein sequentielles Sampling-Verfahren, bei dem dem Sende- / Empfangssignal in zeitlich äquidistanten Abständen periodisch Abtastwerte entnommen werden. Wird der Zeitpunkt der Abtastung kontinuierlich bezüglich des Sendezeitpunktes verschoben, so ergeben die einzelnen Abtastwerte zusammengesetzt wieder ein - nun allerdings zeitgedehntes - Abbild des ursprünglichen Signals. Wichtig für eine gleichmäßig konstante, fehlerfreie Zeitdehnung ist die definierte Verschiebung des Abtastzeitpunktes bezüglich des Sendezeitpunktes. Ergebnis dieses Verfahrens ist eine Echokurve (406, 507), die über einen Zeitraum von einigen Millisekunden vorteilhafter Weise abgetastet und im Speicher eines Prozessors abgelegt wird.

Die bislang vorgestellten Ausführungsformen der Messeinrichtung erlauben die Bestimmung eines mittleren Feuchtigkeitswertes, wie er auch mit anderen Messgeräten bestimmt werden kann.

Fig. 6 zeigt ein weiteres Ausführungsbeispiel einer Messeinrichtung gemäß einem Ausführungsbeispiel der Erfindung. Das Messgerät 600 mag im Unterschied zum Messgerät 501 eine aus zumindest zwei Leitungen 601, 602 bestehende Wellenführeinrichtung besitzen. Es mag auch möglich sein, andere Sonden als Wellenführeinrichtung zu nutzen, beispielsweise eine Stabsonde, eine Koaxialsonde oder eine aus einem Seil bestehende Sonde.

Die beiden Leitungen mögen durch regelmäßig angeordnete Distanzhalter 603 in einer definierten Distanz zueinander positioniert sein. Die Distanzhalter können durch beliebige isolierende Materialien realisiert sein. Beispielsweise können Kunststoffe mit einer hohen mechanischen Festigkeit verwendet werden.

Das Messgerät erfasst wie in den oben genannten Beispielen auf bekannte Art und Weise eine Echokurve 611. Die einzelnen Abstandhalter reflektieren jeder für sich einen Teil der Mikrowellenenergie, was sich durch entsprechend regelmäßig angeordnete Echos 607 in der Echokurve widerspiegelt.

Der Abstand $k_1$, $k_2$, ... der entsprechenden Echos in der Echokurve entspricht bis zum eigentlichen Füllgutecho 617 dem physikalisch vorhandenen, vorab bekannten Abstand der Distanzhalter 603. Unterhalb des Füllgutniveaus, d.h. in Entfernungsbereichen größer als dem Abstand zur Füllgutoberfläche, erfahren die Mikrowellen eine Reduktion der Ausbreitungsgeschwindigkeit, die u.a. von der Feuchtigkeit des Mediums im durchlaufenen Abschnitt abhängt. Der physikalisch konstante Abstand k zwischen den vom Füllgut 108 bedeckten Abstandhaltern 603, 604, 605, 606 wird in der Echokurve durch unterschiedliche gemessene Distanzen $K_u$, $K_v$, $K_w$ 608, 609, 610 abgebildet.

Aus jeder dieser verlängert abgebildeten Distanzen mag die Feuchtebestimmungseinrichtung 616 einen jeweiligen Feuchtewert F(d) des Materials im entsprechenden Abstand d vom Messgerät ermitteln (612, 613, 614). Die Vorgehensweise zur Auswertung der Einzelabstände $K_i$ entspricht der weiter oben beschriebenen Vorgehensweise bei der Auswertung der beiden Echos eines Straffgewichtes. Die dort beschriebenen Formelzusammenhänge gelten sinngemäß auch für den Fall zweier benachbart angeordneter Störstellen auf der Sonde. Der jeweils ermittelte Feuchtigkeitswerte F mag der Distanz in der Mitte zwischen den jeweiligen Abstandhaltern zugeordnet werden.

Aus den ermittelten Kennwerten 612, 613, 614 kann unter Verwendung von Interpolationsverfahren ein komplettes Feuchtigkeitsprofil 615 des Mediums im Behälter ermittelt werden, und an der Schnittstelle 506 des Sensors in analoger und/oder digitaler Weise bereitgestellt werden.

Dieses Prinzip lässt sich auch auf Einzelleiter, Koaxialleiter oder Hohlleiter anwenden, indem in Abständen Störstellen entlang des Koaxialleiters oder Hohlleiters vorgesehen werden.

Die Ermittlung der Feuchtigkeit eines Mediums unter Verwendung elektromagnetischer Wellen kann unter Berücksichtigung der Temperatur des Mediums weiter verbessert werden.

Fig. 7 zeigt entsprechende Ausführungsbeispiele. Das Messgerät 701 weist hierzu einen im Sensor eingebauten Temperatursensor 706 auf, welcher mit der Feuchteermittlungseinheit 704 verbunden ist. Die im Sensor ermittelten Temperaturwerte liefern eine erste Näherung für die tatsächliche Temperatur des Mediums 104 im Behälter, und können die Bestimmung des Feuchtigkeitswertes auf Basis der vom Sensor erfassten Echokurve 406 deutlich verbessern.

Die Veränderung der Dielektrizitätszahlen für verschiedene Medien in Abhängigkeit von der Temperatur ist vorab bekannt, und kann aus den entsprechenden Standardwerken für die Mikrowellenmesstechnik entnommen werden. Die Abhängigkeiten können im Rahmen der Fertigung des Gerätes fest in dieses einprogrammiert werden, so dass während des Betriebes direkt auf die Temperaturkompensationskurven zugegriffen werden kann.

Das Messgerät 701 kann als Füllstandradar ausgeführt sein, welches ein dreidimensionales oder zumindest zweidimensionales Feuchtigkeitsprofil bestimmen kann. Das Füllstandradar scannt hierfür die Oberfläche des Füllgutes (Schüttgutes) ab und erfasst auf diese Weise eine Serie von Echokurven, wobei jede Echokurve einer anderen Hauptabstrahlrichtung der Füllstandradarantenne entspricht. Aus jeder Echokurve lässt sich die Feuchtigkeit des Füllmediums in einem bestimmten Bereich des Füllmediums (durch den die jeweilige Hauptabstrahlrichtung verläuft) bestimmen. Aus den verschiedenen, auf diese Weise bestimmten Feuchtigkeiten ergibt sich somit eine Feuchtigkeitsverteilung, also ein 2D oder 3D Feuchtigkeitsprofil des Füllmediums.

Weitere Verbesserungen ergeben sich bei Verwendung einer berührungslosen Temperaturerfassungseinheit 707, wie sie in einer weiteren Vorrichtung 702 verwendet wird. Die beispielsweise als Infrarotthermometer realisierte Temperaturerfassungseinheit 707 bestimmt berührungslos die Temperatur an der Oberfläche 709 des zu vermessenden Mediums, und leitet diese an die Feuchteermittlungseinheit 704 weiter, welche nun mit weiter erhöhter Genauigkeit die Feuchte des Mediums 104 bestimmen kann.

Bei der Verwendung von geführten Mikrowellen ergeben sich weitere Möglichkeiten zur direkten, berührenden Erfassung der Temperatur des Mediums 104. Die Anordnung 703 verwendet hierzu einen oder mehrere über die Länge der Wellenführeinrichtung 710 (bei der es sich um die Messeinrichtung 202 der Fig. 5 oder die Messeinrichtung 601 - 606 der Fig. 6 handeln kann) eingebaute Temperatursensoren 708, welche beispielsweise über ein Bussystem miteinander verbunden sind, und über welches die Feuchteermittlungseinheit 705 die Temperatur oder mehrere Temperaturen innerhalb des Mediums 104 direkt auslesen und zur hochgenauen Berechnung der Feuchte des Mediums verwenden kann. Fig. 7 zeigt eine Weiterbildung der Messeinrichtung der Fig. 5. Selbstverständlich lässt sich hierdurch aber auch, wie bereits ausgeführt, eine Messeinrichtung gemäß Fig. 6 weiter verbessern.

Die einzelnen Temperatursensoren können direkt in die Wellenführeinrichtung 710 eingebaut werden, beispielsweise direkt bei der Herstellung des entsprechenden Seiles 710 oder bei der Anbringung entsprechender Straffgewichte 204. Insbesondere kann die Temperaturerfassungseinrichtung direkt im oder am Straffgewicht 204 angebracht sein. Es mag auch möglich sein, eine parallel zur Wellenführeinrichtung 202, 710 angeordnete Temperaturerfassungseinrichtung zu positionieren, welche die Erfassung zumindest einer Temperatur des Mediums 104 ermöglicht.

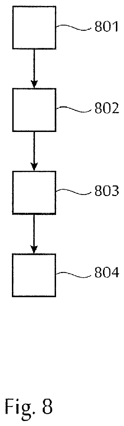

Fig. 8 zeigt ein Flussdiagramm eines Verfahrens. In Schritt 801 erfolgt ein Erzeugen eines Messsignals. In Schritt 802 erfolgt dann ein Bestimmen des Füllstands aus einer Echokurve des Messsignals. In Schritt 803, der vor, nach oder gleichzeitig zum Schritt 802 durchgeführt werden kann, erfolgt ein Bestimmen einer Feuchtigkeit des Füllmediums aus der Echokurve. Während des Verfahrens wird das Messgerät mit elektrischer Energie ausschließlich über eine Zweileiterschnittstelle (beispielsweise 4...20 mA) versorgt. In Schritt 804 erfolgt dann die Ausgabe zumindest eines der Messwerte ausgewählt aus der Gruppe der Messwerte Füllstand und Feuchtigkeit über die Zweileiterschnittstelle.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1. Füllstandmessgerät zur Bestimmung eines Füllstands eines Schüttgut-Füllmediums, aufweisend:

   eine Hochfrequenzeinheit (101, 502) zum Erzeugen eines Messsignals (102, 512);
   eine Signalverarbeitungseinheit (106, 504) zum Bestimmen des Füllstands des Schüttgut-Füllmediums aus einer Echokurve (406, 507) des Messsignals; **dadurch gekennzeichnet,**

   **dass** das Füllstandmessgerät ein Temperatursensor (706, 707) an oder in einem Straffgewicht oder in einem Messgerätegehäuse des Füllstandmessgeräts, zur Erfassung eines Temperaturmesswerts zur Bestimmung einer Temperatur aufweist, und
   **dass** das Füllstandmessgerät darüber hinaus zum Bestimmen einer Feuchtigkeit des Schüttgut-Füllmediums, basierend auf einem Abstand zweier Echos der Echokurve ausgeführt ist, und
   **dass** das Füllstandmessgerät zur Verwendung des Temperaturmesswerts für die Verbesserung der Genauigkeit der Feuchtigkeitsbestimmung ausgeführt ist.

2. Füllstandmessgerät nach Anspruch 1, weiter aufweisend:

   eine Zweileiterschnittstelle (109, 506);

wobei das Füllstandmessgerät zur Energieversorgung und zur Ausgabe zumindest eines der Messwerte ausgewählt aus der Gruppe der Messwerte Füllstand und Feuchtigkeit über die Zweileiterschnittstelle ausgeführt ist.

3. Füllstandmessgerät nach Anspruch 1 oder 2, wobei es sich bei dem Messsignal um ein FMCW Signal handelt.

4. Füllstandmessgerät nach Anspruch 1 oder 2, wobei es sich bei dem Messsignal um einen elektromagnetischen Puls handelt.

5. Füllstandmessgerät nach einem der vorhergehenden Ansprüche, weiter aufweisend:

   eine Datenschnittstelle (410);
   wobei das Füllstandmessgerät zur Energieversorgung und zur Ausgabe eines ersten Messwertes ausgewählt aus der Gruppe der Messwerte Füllstand und Feuchtigkeit über die Zweileiterschnittstelle ausgeführt ist; und
   wobei das Füllstandmessgerät zur Ausgabe eines zweiten Messwertes ausgewählt aus der Gruppe der Messwerte Füllstand und Feuchtigkeit über die Datenschnittstelle ausgeführt ist.

6. Füllstandmessgerät nach einem der vorhergehenden Ansprüche, ausgeführt als Messgerät zur Verwendung freistrahlender elektromagnetischer Wellen als Messsignal.

7. Füllstandmessgerät nach einem der Ansprüche 1 bis 5, ausgeführt als Messgerät zur Verwendung geführter Mikrowellen als Messsignal.

8. Füllstandmessgerät nach Anspruch 7, aufweisend:

   eine Wellenleitereinrichtung (202, 601, 602), welche mehrere entlang einer Längserstreckungsrichtung der Wellenleitereinrichtung zueinander beabstandet angeordnete Reflektoren (603) aufweist;
   wobei das Füllstandmessgerät zur Bestimmung eines Feuchtigkeitsprofils aus der Echokurve und entlang der Wellenleitereinrichtung ausgeführt ist.

9. Verfahren zum Bestimmen eines Füllstands eines Schüttgut-Füllmediums, aufweisend die Schritte:

   Erzeugen eines Messsignals (102, 512);
   Bestimmen des Füllstands des Schüttgut-Füllmediums aus einer Echokurve (406, 507) des Messsignals;
   **dadurch gekennzeichnet, dass** das Verfahren weiter die Schritte aufweist:

   Erfassen eines Temperaturmesswerts durch einen Temperatursensor an oder in einem Straffgewicht oder in einem Messgerätegehäuse des Füllstandmessgeräts, zum Bestimmen einer Temperatur;
   Bestimmen einer Feuchtigkeit des Schüttgut-Füllmediums, basierend auf einem Abstand zweier Echos der Echokurve unter Verwendung des Temperaturmesswerts.

10. Verfahren nach Anspruch 9, weiter aufweisend den Schritt:
    Versorgen eines das Verfahren durchführenden Geräts mit elektrischer Energie über eine 4...20 mA Zweileiterschnittstelle.

11. Verfahren nach Anspruch 9 oder 10, weiter aufweisend den Schritt:
    Ausgabe zumindest eines der Messwerte ausgewählt aus der Gruppe der Messwerte Füllstand und Feuchtigkeit über die Zweileiterschnittstelle.

12. Programmelement, das, wenn es auf einem Prozessor ausgeführt wird, den Prozessor anweist, den folgenden Schritt durchzuführen:

    Bestimmen des Füllstands des Schüttgut-Füllmediums aus einer Echokurve (406, 507) eines Messsignals;
    **dadurch gekennzeichnet, dass** das Programmelement, wenn es auf dem Prozessor ausgeführt wird, den Prozessor anweist, den folgenden Schritt durchzuführen:
    Bestimmen einer Feuchtigkeit des Schüttgut-Füllmediums, basierend auf einem Abstand zweier Echos der Echokurve unter Verwendung eines Temperaturmesswerts, der an oder in einem Straffgewicht oder in einem Messgerätegehäuse des Füllstandmessgeräts mit einem Temperatursensor erfasst wurde.

13. Computerlesbares Medium, auf dem ein Programmelement gespeichert ist, das, wenn es auf einem Prozessor ausgeführt wird, den Prozessor anweist, den folgenden Schritt durchzuführen:

    Bestimmen des Füllstands des Schüttgut-Füllmediums aus einer Echokurve (406, 507) eines Messsignals;
    **dadurch gekennzeichnet, dass** das Programmelement den Prozessor anweist, den folgenden Schritt durchzuführen:
    Bestimmen einer Feuchtigkeit des Schüttgut-Füllmediums, basierend auf einem Abstand zweier Echos der Echokurve unter Verwendung eines Temperaturmesswerts, der an oder in einem Straffgewicht oder in einem Messgerätegehäuse des Füllstandmessgeräts mit einem Temperatursensor erfasst wurde.

**Claims**

1. Level measuring instrument for determining a level of a bulk material filling medium, comprising:

   a radio high-frequency unit (101, 502) for generating a measurement signal (102,512);
   a signal processing unit (106, 504) for determining the fill-level of the bulk material from an echo curve (406, 507) of the measurement signal;
   **characterized in that** the level measuring instrument has a temperature sensor (706, 707) for measuring a temperature value for determining a temperature, arranged at or in a tautening weight or in a measuring instrument housing of the level measuring instrument; and
   **in that** the level measuring instrument is additionally designed to determine from the echo curve a moisture content of the bulk material, based on a distance of two echoes of the echo curve; and
   **in that** the level measuring instrument is designed to use the measured temperature value to improve the accuracy with which the moisture content is determined.

2. Level measuring instrument according to claim 1, further comprising:

   a two-wire interface (109, 506);
   wherein the level measuring instrument is designed to be supplied with power and to output at least one of the measured values, selected from the group of measured level and moisture-content values, via the two-wire interface.

3. Level measuring instrument according to either claim 1 or claim 2,
   wherein the measurement signal is an FMCW signal.

4. Level measuring instrument according to either claim 1 or claim 2,
   wherein the measurement signal is an electromagnetic pulse.

5. Level measuring instrument according to any of the preceding claims, further comprising:

   a data interface (410);
   wherein the level measuring instrument is designed to be supplied with power and to output a first measured value, selected from the group of measured level and moisture-content values, via the two-wire interface; and
   wherein the level measuring instrument is designed to output a second measured value, selected from the group of measured level and moisture-content values, via the data interface.

6. Level measuring instrument according to any of the preceding claims, designed as a measuring instrument for using electromagnetic waves radiating into free space as the measurement signal.

7. Level measuring instrument according to any of claims 1 to 5, designed as a measuring instrument for using guided microwaves as the measurement signal.

8. Level measuring instrument according to claim 7, comprising:

   a waveguide apparatus (202, 601, 602), which comprises a plurality of reflectors (603) spaced apart from one another along a longitudinal extension direction of the waveguide apparatus;
   wherein the level measuring instrument is designed to determine a moisture profile from the echo curve and along the waveguide apparatus.

9. Method for determining a level of a bulk material, comprising the steps of:

   generating a measurement signal (102; 512);
   determining the fill level of the bulk material from an echo curve (406, 507) of the measurement signal;
   **characterized in that** the method has the steps of:

   capturing a temperature value by a temperature sensor, which is arranged at or in a tautening weight or in a measuring instrument housing of the level measuring instrument, for determining a temperature;
   determining a moisture content of the bulk material, based on a distance of two echoes of the echo curve and using the temperature value.

10. Method according to claim 9, further comprising the step of:
    supplying electrical power via a 4...20 mA two-wire interface to an instrument performing the method.

11. Method according to either claim 9 or claim 10, further comprising the step of:
    outputting at least one of the measured values, selected from the group of measured level and moisture-content values, via the two-wire interface.

12. Program element, which, when executed on a processor, instructs the processor to perform the following step:

determining the level of the bulk material from an echo curve (406, 507) of a measurement signal;
**characterized in that** the program element, when executed on the processor, instructs the processor to perform the following step:
determining a moisture content of the bulk material, based on a distance of two echoes of the echo curve and using a temperature value, which has been captured by a temperature sensor, which is at or in a tautening weight or in a measuring instrument housing of the level measuring instrument.

13. Machine-readable medium on which a program element is stored which, when executed on a processor, instructs the processor to perform the following step:
determining the fill level of the bulk material from an echo curve (406, 507) of a measurement signal.

## Revendications

1. Appareil de mesure de niveau de remplissage pour la détermination d'un niveau de remplissage d'un milieu de remplissage en vrac, comprenant :

une unité haute fréquence (101, 502) pour l'émission d'un signal de mesure (102, 512) ;
une unité de traitement du signal (106, 504) pour la détermination du niveau de remplissage du milieu de remplissage en vrac à partir d'une courbe d'écho (406, 507) du signal de mesure ;
**caractérisé en ce que** l'appareil de mesure de niveau de remplissage comporte un capteur de température (706, 707) sur ou dans un poids tenseur ou dans un boîtier d'appareil de mesure de l'appareil de mesure de niveau de remplissage pour saisir une valeur de mesure de température afin de déterminer une température, et
**en ce que** l'appareil de mesure de niveau de remplissage est réalisé pour utiliser la valeur de mesure de température afin d'améliorer la précision de la détermination de l'humidité.

2. Appareil de mesure de niveau de remplissage selon la revendication 1, comportant en outre :

une interface à deux conducteurs (109, 506) ;
dans lequel l'appareil de mesure de niveau de remplissage est réalisé pour l'alimentation en énergie et pour l'émission d'au moins une des valeurs de mesure sélectionnées parmi le groupe des valeurs de mesure de remplissage et d'humidité par le biais de l'interface à deux conducteurs.

3. Appareil de mesure de niveau de remplissage selon la revendication 1 ou 2,
dans lequel on entend par signal de mesure un signal FMCW.

4. Appareil de mesure de niveau de remplissage selon la revendication 1 ou 2,
dans lequel on entend par signal de mesure une pulsation électromagnétique.

5. Appareil de mesure de niveau de remplissage selon l'une des revendications précédentes, comportant en outre :

une interface de données (410) ;
dans lequel l'appareil de mesure de niveau de remplissage est réalisé pour l'alimentation en énergie et pour l'émission d'une première valeur de mesure sélectionnée parmi le groupe des valeurs de mesure de remplissage et d'humidité par le biais de l'interface à deux conducteurs ; et
dans lequel l'appareil de mesure de niveau de remplissage est réalisé pour l'émission d'une deuxième valeur de mesure sélectionnée parmi le groupe des valeurs de mesure de remplissage et d'humidité par le biais de l'interface de données.

6. Appareil de mesure de niveau de remplissage selon l'une des revendications précédentes, réalisé comme appareil de mesure pour l'utilisation d'ondes électromagnétiques à rayonnement libre en tant que signal de mesure.

7. Appareil de mesure de niveau de remplissage selon l'une des revendications 1 à 5, réalisé comme appareil de mesure pour l'utilisation de micro-ondes guidées en tant que signal de mesure.

8. Appareil de mesure de niveau de remplissage selon la revendication 7, comportant :

un dispositif de guide d'ondes (202, 601, 602), lequel comporte plusieurs réflecteurs (603) agencés à distance l'un de l'autre le long d'une direction d'étendue longitudinale du dispositif de guide d'ondes ;
dans lequel l'appareil de mesure de niveau de remplissage est réalisé pour la détermination d'un profil d'humidité à partir de la courbe d'écho et le long du dispositif de guide d'ondes.

9. Procédé de détermination d'un niveau de remplissage d'un milieu de remplissage en vrac, comportant les étapes :

production d'un signal de mesure (102, 512) ; détermination du niveau de remplissage du milieu de remplissage en vrac à partir d'une courbe d'écho (406, 507) du signal de mesure ; **caractérisé en ce que** le procédé comprend en outre les étapes :

saisie d'une valeur de mesure de température par un capteur de température sur ou dans un poids tenseur ou dans un boîtier d'appareil de mesure de l'appareil de mesure de niveau de remplissage pour déterminer une température ; détermination d'une humidité du milieu de remplissage en vrac, basée sur un écart de deux échos de la courbe d'écho en utilisant la valeur de mesure de température.

**10.** Procédé selon la revendication 9, comportant en outre l'étape : alimentation en énergie électrique d'un appareil mettant en œuvre le procédé par le biais d'une interface 4...20 mA.

**11.** Procédé selon la revendication 9 ou 10, comportant en outre l'étape : émission d'au moins une des valeurs de mesure sélectionnées parmi le groupe des valeurs de mesure de remplissage et d'humidité par le biais de l'interface à deux conducteurs.

**12.** Élément de programme qui, lorsque qu'il est réalisé sur un processeur, instruit le processeur de mettre en œuvre les étapes suivantes :

détermination du niveau de remplissage du milieu de remplissage en vrac à partir d'une courbe d'écho (406, 507) du signal de mesure ; **caractérisé en ce que** l'élément de programme, lorsque qu'il est réalisé sur un processeur, instruit le processeur de mettre en œuvre les étapes suivantes : détermination d'une humidité du milieu de remplissage en vrac, basée sur un écart de deux échos de la courbe d'écho en utilisant la valeur de mesure de température, laquelle est saisie par un capteur de température sur ou dans un poids tenseur ou dans un boîtier d'appareil de mesure de l'appareil de mesure de niveau de remplissage.

**13.** Support lisible par ordinateur, sur lequel un élément de programme est enregistré, lequel, lorsque qu'il est réalisé sur un processeur, instruit le processeur de mettre en œuvre les étapes suivantes :

détermination du niveau de remplissage du milieu de remplissage en vrac à partir d'une courbe d'écho (406, 507) du signal de mesure ;

**caractérisé en ce que** l'élément de programme instruit le processeur de mettre en œuvre les étapes suivantes : détermination d'une humidité du milieu de remplissage en vrac, basée sur un écart de deux échos de la courbe d'écho en utilisant la valeur de mesure de température, laquelle est saisie par un capteur de température sur ou dans un poids tenseur ou dans un boîtier d'appareil de mesure de l'appareil de mesure de niveau de remplissage.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1321565 A
- WO 03016835 A
- EP 1308725 A
- WO 9007110 A1